Europäisches Patentamt

European Patent Office

Office européen des brevets

(19)

(11) Veröffentlichungsnummer: **0 032 998**
**B1**

(12) # EUROPÄISCHE PATENTSCHRIFT

(45) Veröffentlichungstag der Patentschrift:
**25.01.84**

(51) Int. Cl.³: **C 08 L 61/02,** C 08 L 1/10,
C 08 L 31/04

(21) Anmeldenummer: **80107717.3**

(22) Anmeldetag: **08.12.80**

(54) **Thermoplastische Formmassen aus Celluloseester-Copfropfpolymerisaten oder deren Abmischungen mit Celluloseestern.**

(30) Priorität: **21.12.79 DE 2951800**
**21.12.79 DE 2951748**

(43) Veröffentlichungstag der Anmeldung:
**05.08.81 Patentblatt 81/31**

(45) Bekanntmachung des Hinweises auf die Patenterteilung:
**25.01.84 Patentblatt 84/4**

(84) Benannte Vertragsstaaten:
**AT BE DE FR GB IT NL**

(56) Entgegenhaltungen:
**Keine**

(73) Patentinhaber: **BAYER AG, Zentralbereich Patente,
Marken und Lizenzen, D-5090 Leverkusen 1, Bayerwerk
(DE)**

(72) Erfinder: **Alberts, Heinrich, Dr., Morgengraben 16,
D-5000 Koeln 80 (DE)**
Erfinder: **Fischer, Winfried, Dr., An der Joch 36,
D-5000 Koeln 80 (DE)**
Erfinder: **Leuschke, Christian, Ing.grad.,
Neckarstrasse 36, D-4047 Dormagen (DE)**
Erfinder: **Bartl, Herbert, Dr., Eichendorffweg 10,
D-5068 Odenthal (DE)**

## Thermoplastische Formmassen aus Celluloseester-Copfropfpolymerisaten oder deren Abmischungen mit Celluloseestern

Die Erfindung betrifft thermoplastische Formmassen aus Copfropfpolymerisaten, die durch Polymerisation von Vinylmonomeren, insbesondere von ungesättigten Estern, in Gegenwart von Mischungen aus Celluloseestern und Ethylenvinylestercopolymerisaten erhalten werden sowie Abmischungen dieser Copfropfpolymerisate mit Celluloseestern.

Formmassen aus Celluloseacetat können ohne Zusatz von Weichmachern nicht thermoplastisch verarbeitet werden, da sich dieser Ester vor dem Erweichen zu zersetzen beginnt. Auch bei Celluloseacetopropionaten und -acetobutyraten liegen die Erweichungs- und Zersetzungstemperaturen so nahe beieinander, dass auch diese Formmassen vor ihrer thermoplastischen Verarbeitung mit Weichmachern abgemischt werden müssen. Damit erreicht man die notwendige Herabsetzung der Verarbeitungstemperatur und Verarbeitungsviskosität.

Als Weichmacher für organische Celluloseester dienen vornehmlich aliphatische Ester der Phthalsäure, Adipinsäure, Azelainsäure, Sebacinsäure und Phosphorsäure wie beispielsweise Dimethylphthalat, Diethylphthalat, Dibutyladipat, Dioctyladipat, Dibutylacetat, Trichlorethylphosphat und Tributylphosphat. Oft ist es auch vorteilhaft, Weichmachergemische einzusetzen.

Obwohl die mit Weichmachern modifizierten Celluloseesterformmassen eine sehr gute Transparenz zeigen, wäre es wünschenswert, für manche Anwendungszwecke ihre Wärmeformbeständigkeit weiter zu verbessern. Ausserdem wandern die Weichmacher mit der Zeit an die Oberfläche der Formkörper, so dass z.B. Folien aus modifizierten Celluloseestern nicht zur Verpackung von bestimmten Lebensmitteln verwendet werden können.

Aus der deutschen Auslegeschrift Nr. 1303219 sind Abmischungen aus organischen Celluloseestern, niedermolekularen Weichmachern und Olefinpolymerisaten bekannt. Bei einem höheren Gehalt an Olefinpolymerisaten sind jedoch solche Formmassen nicht mehr transparent. Ausserdem dienen hier herkömmliche niedermolekulare Ester mit den bekannten Nachteilen als Weichmacher.

Die Verwendung polymerer Weichmacher für Cellulosemischester ist ebenfalls bekannt. In der US-PS Nr. 3682850 werden thermoplastische Mischungen aus 40 bis 90 Gew.-% Celluloseestern und 10 bis 60 Gew.-% eines Ethylen/Vinylacetat-Copolymeren mit einem Vinylacetatgehalt von 75 bis 99 Gew.-% beschrieben, die durch gute mechanische Festigkeitswerte und hohe Transparenz gekennzeichnet sind.

Aus der deutschen Offenlegungsschrift Nr. 2426178 sind ferner transparente thermoplastische Formmassen aus organischen Celluloseestern und Ethylen/Vinylester-Copolymeren bekannt.

Die eingesetzten Ethylen/Vinylester-Copolymeren enthalten 30 bis 98, vorzugsweise 60 bis 98 Gew.-% eingebauten Vinylester.

Mischungen aus Cellulosemischestern und Ethylen/Vinylester-Copolymeren mit weniger als 75 Gew.-% an eingebautem Vinylester in der Ethylencopolymerisatkomponente sind zwar im allgemeinen transparent, weisen aber mit steigendem Gewichtsanteil des Ethylenvinylestercopolymeren in der Abmischung eine zunehmende Neigung zu Weissbruch *(crazing)* bei Biege- oder Dehnungsbeanspruchung auf.

Diese Minderung der Transparenz ist für spezielle Anwendungen unerwünscht. Die nicht ausreichende Verträglichkeit der Polymeren erschwert zugleich die Herstellung weicher, flexibler Formmassen, die auch unter extremer Dehnungs- oder Biegebeanspruchung hohe Transparenz ohne Weissbruch aufweisen sollen.

Es wurde nun gefunden, dass die vorerwähnten Nachteile überwunden und hochtransparente, weiche und flexible Formmassen auf der Basis von organisachen Celluloseestern und Ethylen/Vinylester-Copolymeren mit bis zu 75 Gew.-% eingebautem Vinylester erhalten werden, wenn auf Mischungen aus organischen Celluloseestern und Ethylen/Vinylester-Polymerisaten als Pfropfsubstrat Vinylester und Acrylester oder deren Gemische aufgepfroft werden oder wenn die so erhaltenen Copfropfpolymerisate mit weiteren Celluloseestern abgemischt werden. Durch die Pfropfung werden gleichzeitig die Polymeren des Pfropfsubstrats ganz oder teilweise untereinander verbrückt.

Gegenstand der Erfindung sind somit thermoplastische Formmassen, bestehend aus

1) 1 bis 99, vorzugsweise 15 bis 85 Gew.-% eines Pfropfsubstrates, das sich zusammensetzt aus

   a) 1 bis 99, vorzugsweise 20 bis 95 Gew.-% eines Ethylen/Vinylester-Copolymerisats mit 5 bis 75 Gew.-%, vorzugsweise 25 bis 55 Gew.-% eingebautem Vinylester, und

   b) 99 bis 1, vorzugsweise 80 bis 5 Gew.-% eines Celluloseesters einer oder mehrerer aliphatischer $C_1$-$C_6$-Carbonsäuren

und, als Pfropfmonomere, aus polymerisierten Einheiten von

2) 99 bis 1, vorzugsweise 85 bis 15 Gew.-%, Alkylestern der Acryl- und/oder Methacrylsäure und/oder Vinylestern, und

3) 0 bis 20 Gew.-% $C_2$-$C_4$-$\alpha$-Olefinen,

wobei mindestens ein Teil des Ethylen/Vinylester-Copolymerisats und ein Teil des Celluloseesters über polymerisierte Einheiten der Pfropfmonomeren miteinander verbrückt sind und die Summe der Komponenten 1 bis 3 und a und b jeweils 100 Gew.-% beträgt.

Gegenstand der Erfindung sind ausserdem thermoplastische Formmassen, bestehend aus

I   1 bis 99, vorzugsweise 50 bis 99 Gew.-% eines Celluloseesters einer oder mehrerer aliphatischer $C_1$ bis $C_5$-Carbonsäuren, und

II  99 bis 1, vorzugsweise 50 bis 1 Gew.-% eines Copfropfpolymerisates aus

1) 1 bis 99, vorzugsweise 15 bis 85 Gew.-% eines Pfropfsubstrates, das sich zusammensetzt aus

a) 1 bis 99, vorzugsweise 20 bis 95 Gew.-% eines Ethylen/Vinylester-Copolymerisats mit 5 bis 75, vorzugsweise 25 bis 55 Gew.-% eingebautem Vinylester, und

b) 99 bis 1, vorzugsweise 80 bis 5 Gew.-% eines Celluloseesters einer oder mehrerer aliphatischer $C_1$ bis $C_5$-Carbonsäuren

und, als Pfropfmonomere, aus polymerisierten Einheiten von

2) 99 bis 1, vorzugsweise 85 bis 15 Gew.-%, Alkylestern der Acryl- und/oder Methacrylsäure und/oder Vinylestern, und

3) 0 bis 20 Gew.-% $C_2$ bis $C_4$-α-Olefinen,

wobei in der Komponente II mindestens ein Teil des Ethylen/Vinylester-Copolymerisats und ein Teil des Celluloseesters über polymerisierte Einheiten der Pfropfmonomeren miteinander verbrückt sind und die Summe der Komponenten I und II, 1 bis 3 und a und b jeweils 100 Gew.-% beträgt.

Geeignete Celluloseester zur Herstellung der erfindungsgemässen Formmassen sind Celluloseester aliphatischer Carbonsäuren mit 1 bis 5 C-Atomen, vorzugsweise Celluloseacetat, -acetopropionat und -acetobutyrat.

Die Verfahren zur Herstellung von organischen Celluloseestern sind seit langem bekannt und werden beispielsweise in „Ullmanns Enzyklopädie der technischen Chemie", Verlag Urban u. Schwarzenberg, München-Berlin (1963), 5. Bd., S. 182 bis 201, beschrieben.

Bevorzugte Celluloseacetobutyrate enthalten 40 bis 50 Gew.-% Buttersäuregruppen und 15 bis 26 Gew.-% Essigsäuregruppen.

Besonders bevorzugt für die erfindungsgemässen Formmassen eignen sich Celluloseacetobutyrate mit folgender Zusammensetzung: 42 bis 46 Gew.-% Buttersäuregruppen und 18 bis 22 Gew.-% Essigsäuregruppen.

Bevorzugte Celluloseacetopropionate enthalten im allgemeinen 50 bis 66 Gew.-% Propionsäuregruppen und 1 bis 12 Gew.-% Essigsäuregruppen und besonders bevorzugte Celluloseacetopropionate haben folgende Zusammensetzung: 54 bis 66 Gew.-% Propionsäuregruppen und 4 bis 9 Gew.-% Essigsäuregruppen.

Von den Celluloseacetaten werden bevorzugt Sekundär-Celluloseacetate eingesetzt.

Die relativen Viskositäten ($\eta_{rel}$) von 2 gew.-%igen Lösungen der verwendeten aliphatischen Celluloseester in Aceton liegen bei 20° C zwischen 2,5 und 6,0, bevorzugt zwischen 3,5 und 5,0.

Die Erfindung betrifft weiterhin ein Verfahren zur Herstellung von thermoplastischen Formmassen aus

1) 1 bis 99 Gew.-% eines Pfropfsubstrates, das sich zusammensetzt aus

a) 1 bis 99 Gew.-% eines Ethylen/Vinylester-Copolymerisats mit 5 bis 75 Gew.-% eingebauten Vinylester, und

b) 99 bis 1 Gew.-% eines Celluloseesters einer oder mehrerer aliphatischer $C_1$-$C_5$-Carbonsäuren und polymerisierten Einheiten von

2) 99 bis 1 Gew.-% Alkylestern der Acryl- und/oder Methacrylsäure und/oder Vinylestern, und

3) 0 bis 20 Gew.-% $C_2$-$C_4$-α-Olefinen,

wobei mindestens ein Teil des Ethylen/Vinylester-Polymerisats und ein Teil des Celluloseesters über polymerisierte Einheiten der Pfropfmonomeren miteinander verbrückt sind und die Summe der Komponenten 1 bis 3 und a und b jeweils 100 Gew.-% beträgt, durch radikalische Polymerisation der Monomeren 2 und gegebenenfalls 3 in Gegenwart des Pfropfsubstratgemisches aus 1a und 1b und gegebenenfalls Abmischung von

I 1 bis 99 Gew.-% des so erhaltenen Copfropfpolymerisats mit

II 99 bis 1 Gew.-% eines Celluloseesters einer oder mehrerer aliphatischer $C_1$ bis $C_5$-Carbonsäuren,

wobei die Summe der Komponenten I und II stets 100 Gew.-% beträgt.

Weiterhin betrifft die Erfindung ein Verfahren, das dadurch gekennzeichnet ist, dass

1) 1 bis 99 Gew.-% eines Pfropfsubstrates, das sich zusammensetzt aus

a) 1 bis 99 Gew.-% eines Ethylen/Vinylacetat-Copolymerisats mit 5 bis 75 Gew.-% eingebautem Vinylacetat, und

b) 99 bis 1 Gew.-% eines Celluloseesters einer oder mehrerer aliphatischer $C_1$ bis $C_5$-Carbonsäuren, und

als Pfropfmonomere

2) 99 bis 1 Gew.-% Vinylacetat und/oder $C_1$ bis $C_4$-Alkylestern der Acryl- und/oder Methacrylsäure, und

3) 0 bis 20 Gew.-% $C_2$ bis $C_4$-α-Olefinen,

wobei die Summe der Komponenten 1 bis 3 und a und b jeweils 100 Gew.-% beträgt, eingesetzt werden.

Ein weiteres Verfahren ist dadurch gekennzeichnet, dass

1) 15 bis 85 Gew.-% eines Pfropfsubstrates, das sich zusammensetzt aus

a) 20 bis 95 Gew.-% eines Ethylen/Vinylacetat-Copolymerisats mit 25 bis 55 Gew.-% eingebautem Vinylacetat, und

b) 80 bis 5 Gew.-% eines Celluloseesters einer oder mehrerer aliphatischer $C_1$ bis $C_5$-Carbonsäuren, und

als Pfropfmonomere

2) 85 bis 15 Gew.-% Vinylacetat und/oder $C_1$ bis $C_4$-Alkylestern der Acryl- und/oder Methacrylsäure, und

3) 0 bis 20 Gew.-% $C_2$ bis $C_4$-α-Olefinen,

wobei die Summe der Komponenten 1 bis 3 und a und b jeweils 100 Gew.-% beträgt, eingesetzt werden.

Ein weiteres Verfahren ist dadurch gekennzeichnet, dass als Celluloseester, Celluloseacetat, Celluloseacetobutyrat, Celluloseacetopropionat oder deren Mischungen eingesetzt werden.

Die für die Herstellung der Copfropfpolymerisate eingesetzten Celluloseester stimmen im allgemeinen in ihrer Zusammensetzung mit den für die Herstellung der Abmischungen eingesetzten Celluloseestern überein, es ist aber selbstverständlich auch möglich, für die Abmischung andere Celluloseester als die, die in den Copfropfpolymeren enthalten sind, einzusetzen.

Die Ethylen/Vinylester-Copolymeren werden nach den bekannten Verfahren der Hoch- oder Mitteldrucksynthese in Substanz, Lösung oder Emulsion hergestellt.

Als Vinylester kommen organische Vinylester von gesättigten, gegebenenfalls durch Halogen, insbesondere durch Chlor, substituierten aliphatischen Monocarbonsäuren mit 1 bis 18 C-Atomen oder aromatischen Monocarbonsäuren mit 7 bis 11 C-Atomen in Frage. Namentlich seien genannt: Vinylformiat, Vinylacetat, Vinylpropionat, Vinylchlorpropionat, Vinylbutyrat, Vinylisobutyrat, Vinylcapronat, Vinyllaurinat, Vinylmyristinat, Vinylstearat, Vinylbenzoat, vorzugsweise Vinylacetat.

Die nach dem Verfahren der Hochdrucksynthese hergestellten Ethylen/Vinylester-Copolymerisate besitzen Schmelzindexwerte — nach DIN 53735 bei 190° C und einer Belastung von 2,16 kp — zwischen 0,1 und 100, vorzugsweise zwischen 1,0 und 10, insbesondere von 3,5 bis 6. Die in Tetralin bei 120° C gemessenen Grenzviskositäten liegen im allgemeinen zwischen 0,6 und 1,5

$$\left[\frac{dl}{g}\right]$$

Die nach der Methode der Lichtstreuung ermittelten Molekulargewichte liegen vorzugsweise zwischen 50 000 und 1 Mio. Die nach der Beziehung $M_w/M_n - 1$ definierte Uneinheitlichkeit U (G. Schulz, „Z. phys. Chem. [B]", 43 [1939], S. 25-34) liegt im Bereich von 5 bis 30. Diese Copolymerisate sind in Kohlenwasserstoffen oder Alkoholen löslich.

Die beispielsweise nach dem Verfahren der Lösungs- oder Emulsionspolymerisation hergestellten Ethylen/Vinylester-Copolymerisate, die 5 bis 75 Gew.-% Vinylester, vorzugsweise 25 bis 55 Gew.-% Vinylester enthalten, besitzen Schmelzindexwerte (190° C, 2,16 kp), die grösser als 100 sein können, vorzugsweise liegt der Schmelzindexbereich unter 15, insbesondere zwischen 0,5 und 5. Die mittels Lichtstreuung gemessenen Molekulargewichte liegen vorzugsweise zwischen 40 000 und 1 Mio. Die Uneinheitlichkeit U beträgt 1 bis 6. Die Copolymerisate sind löslich in Kohlenwasserstoffen und Alkoholen und besitzen vorzugsweise Grenzviskositäten $[\eta]$ zwischen 0,5 und 2,5

$$\left[\frac{dl}{g}\right]$$

in Toluol.

Als Monomere zur Herstellung der Copfropfpolymerisate werden in erster Linie Vinylester und/oder Alkylester der (Meth)Acrylsäure eingesetzt. Geeignet sind die $C_1$ bis $C_{14}$-, vorzugsweise die $C_1$ bis $C_4$-Alkylester der Acryl- und/oder Methacrylsäure wie Methyl(meth)acrylat, Ethyl(meth)-acrylat, n-Propyl- und Isopropyl(meth)acrylat, n-Butyl- und Isobutyl(meth)acrylat und 2-Ethylhexyl(meth)acrylat. Geeignete Vinylester sind die bereits weiter oben beschriebenen Vinylester aliphatischer oder aromatischer Monocarbonsäuren, vorzugsweise Vinylacetat.

Weitere geeignete Monomere sind $C_2$ bis $C_4$-$\alpha$-Olefine wie Ethylen, Propylen und Isobutylen sowie gegebenenfalls Acrylsäure und Methacrylsäure.

Falls keine transparenten Pfropfcopolymeren gewünscht werden, können auch Vinylaromaten wie Styrol oder $\alpha$-Methylstyrol, gegebenenfalls in Abmischung mit den (Meth)Acrylestern eingesetzt werden.

Die Pfropfpolymerisation wird in Lösung oder in Masse durchgeführt. Als Lösungsmittel seien genannt Kohlenwasserstoffe wie Benzol, Toluol, Xylol, Alkohole wie Methanol, Ethanol, Propanol, iso-Propanol, n-Butanol, tert.-Butanol oder ihre Gemische mit Wasser, chlorierte Kohlenwasserstoffe wie Chlorbenzol, Methylenchlorid, Tetrachlorethylen, Essigsäuremethylethyl- oder -butylester und Eisessig oder ihre Gemische.

Das Lösen der Pfropfsubstrate kann in bekannter Weise im ausgewählten Lösungsmittelsystem durchgeführt werden. Man kann selbstverständlich zunächst die Lösung des einen Pfropfsubstrates herstellen und dann in dieser Lösung oder in einem beliebigen, mit dem ersten Lösungsmittel mischbaren Lösungsmittel, das zweite Polymer auflösen und sodann die beiden Mischungen vereinigen und die so erhaltene homogene Lösung für die Pfropfreaktion einsetzen. Die Pfropfpolymerisation wird bevorzugt in homogener Phase durchgeführt, kann aber prinzipiell auch in heterogener Phase erfolgen. Es ist auch durchaus möglich, zunächst eine homogene Phase aus Pfropfsubstrat, Vinylmonomeren und gegebenenfalls Lösungsmittel herzustellen, die Lösung in Wasser zu dispergieren und dann, gegebenenfalls nach Zusatz eines Katalysators, zu polymerisieren. Die Polymerisation kann kontinuierlich oder diskontinuierlich erfolgen.

Die Pfropfreaktion kann auch mit oder ohne Lösungsmittel in Polymerisationsschnecken durchgeführt werden, und das Abdampfen des Lösungsmittels oder der Restmonomeren aus dem Pfropfpolymerisationsansatz in Ausdampfschnecken, Dünnschichtverdampfern oder Sprühtrocknern erfolgen.

Die Polymerisation wird bei Temperaturen zwischen $-20°$ C und $+250°$ C, vorzugsweise von $+30°$ C bis $+180°$ C und bei Drucken zwischen Normaldruck bis 300 bar, vorzugsweise bis 25 bar durchgeführt.

Die Polymerisationskatalysatoren können vor, während oder nach dem Löse- bzw. Mischvorgang dem Polymerisationsansatz zugefügt werden. Vorzugsweise werden die Katalysatoren nach Herstellung der homogenen Pfropfsubstratlösung mit den Monomeren oder getrennt von den Monomeren in die Reaktionsmischung eingetragen.

Die Polymerisationskatalysatoren werden zweckmässigerweise in einer Menge von 0,001 bis 2 Gew.-%, bezogen auf die Summe von Pfropfsubstrat und Pfropfmonomeren eingesetzt. Diese Mengen können selbstverständlich weit überschritten werden.

Als Polymerisationskatalysatoren können Per- oder Azoverbindungen oder Radikale liefernde hochsubstituierte Ethanderivate wie z.B. Benzpinakol verwendet werden. Beispielhaft seien genannt: Benzoylperoxid, tert.-Butylperpivalat, Lauroylperoxid, tert.-Butylperoctoat, tert.-Butylperbenzoat, ditert.-Butylperoxid, tert.-Butylperisononanat, Diisopropylpercarbonat, Dicyclohexylpercarbonat, Dicumylperoxid, tert.-Butylperneodecanoat, Azobisisobuttersäurenitril oder Ester der Azobisisobuttersäure wie z.B. deren Bisethylester.

Initiatorradikale können ferner mit bekannten Redoxsystemen oder auch mit Hilfe von UV-Strahlung, aktinischem Licht oder beschleunigten Elektronen erzeugt werden.

Bei der Polymerisation werden die eingesetzten Monomeren sowohl auf den Celluloseester als auch auf das Ethylen/vinylester-Copolymerisat aufgepfropft unter Bildung von Copfropfpolymerisaten, die über polymerisierte Einheiten der Monomeren querverbrückt sind. Diese Querverbrückung ist aufgrund polymeranalytischer Untersuchungen der Pfropfpolymeren nachgewiesen (vgl. Beispiel 1 im Experimentellen Teil). Diese neuartige Querverbindung der an und für sich zur Entmischung neigenden Ausgangspolymeren macht die gefundene ausserordentliche gute Verträglichkeit der Copfropfpolymeren plausibel.

Die Herstellung der Abmischungen kann nach bekannten Verfahren über eine Lösung und Aufarbeitung der Lösung durch Fällung und Trocknung oder durch Ausdampfen der Lösungsmittel über Ausdampfschnecken, Dünnschichtverdampfer, Schlangenrohrverdampfer oder Sprühtrockner erfolgen. Ferner können die Abmischungen in der Schmelze auf einer Walze, in Schneckenmaschinen oder Knetern hergestellt werden.

Die erfindungsgemässen Formmassen können gegebenenfalls noch mit niedermolekularen Weichmachern modifiziert werden.

Geeignete niedermolekulare Weichmacher sind Dimethylphthalat, Diethylphthalat, Triphenylphosphat, Methylethylenglykolphthalat, Dibutylsebacat, Ethylbutylenglykolphthalat, Butylbutylenglykolphthalat, Dibutylphthalat, Dioctyladipat, Dioctylphthalat, Butylbenzylphthalat und Triacetin.

Die erfindungsgemässen Formmassen können ausserdem Additive enthalten, z.B. um die Polymermischungen zu färben, zu pigmentieren, um ihre Oxidations- oder Lichtbeständigkeit zu verbessern oder ihre Entflammbarkeit zu verringern.

Die erfindungsgemässen Formmassen aus Copfropfpolymerisaten von Ethylen/Vinylester-Copolymerisaten und organischen Celluloseestern zeigen einen bemerkenswerten Anstieg der nach DIN 53543 gemessenen Kerbschlagzähigkeit. Sie zeichnen sich ausserdem durch eine verbesserte Formbeständigkeit in der Wärme aus, die z.B. nach DIN 53460 als Vicaterweichungstemperatur gemessen wird. Die Vicaterweichungstemperaturen liegen bis zu 50° C über den Erweichungstemperaturen der mit niedermolekularen Weichmachern modifizierten Celluloseestern.

Gegenüber diesen herkömmlichen Celluloseesterformmassen zeigen die erfindungsgemässen Formmassen ausserdem noch verbesserte mechanische Eigenschaften wie beispielsweise eine Erhöhung der Härte, der Zugfestigkeit, der Biegefestigkeit und des Elastizitätsmoduls.

Der bekannte Effekt der sogenannten Weichmacherwanderung tritt bei den Copfropfpolymerisaten aus organischen Celluloseestern, Ethylen/Vinylester-Copolymerisaten und Vinylmonomeren und den Abmischungen dieser Copfropfpolymerisate mit weiteren organischen Celluloseestern nicht auf, wodurch solche Formmassen auch beispielsweise für Anwendungen, die einen Kontakt mit Lebensmitteln schaffen, besonders gut geeignet sind.

Die erfindungsgemässen Formmassen lassen sich problemlos auf bekannten Extrudern und Spritzgussmaschinen kontinuierlich und diskontinuierlich verarbeiten und zeigen dabei eine gute Fliessfähigkeit.

Es lassen sich Formkörper jeder Art herstellen sowie Acetatseide, Blockacetat, Folienträger für Sicherheitsfilme, Elektroisolierfolien und Lacke.

Die verbesserte Heissluft- und Alterungsbeständigkeit der Produkte macht auch ihren Einsatz für Aussenverkleidungen möglich.

Die folgenden Beispiele erläutern die Erfindung. Prozentangaben beziehen sich stets auf das Gewicht.

*Beispiel 1*

In einem 40-l-Autoklaven, der mit Ankerrührer und Zudosiermöglichkeiten für verschiedene Lösungen versehen und dessen Innentemperatur exakt über ein Heiz-Kühlmantelsystem zu steuern ist, werden unter Stickstoffatmosphäre 900 g eines Celluloseacetopropionats, enthaltend 57,5 Gew.-% Propionsäure- und 5,5 Gew.-% Essigsäuregruppen, 900 g eines Ethylen/Vinylacetat-Copolymeren (EVA) mit 45% eingebautem Vinylacetat und einer Mooney-Viskosität von 20, 2500 g Vinylacetat, 13 500 g tert.-Butanol und 0,75 g tert.-Butylperpivalat eingefüllt. Der Autoklaveninhalt wird auf 70° C erwärmt und 1 h bei 70° C gerührt. Dann wird mit dem Zudosieren von zwei Lösungen begonnen.

*Lösung 1:* 5600 g Vinylacetat,
*Lösung 2:* 24 g tert.-Butylperpivalat in 4000 g tert.-Butanol

Lösung 1 und 2 werden gleichzeitig innerhalb von 4 h. Man rührt anschliessend 3 h bei 70° C und 1 h bei 80° C nach. Der Ansatz wird heiss abgelassen und mit 500 g einer 5%igen Lösung von 2,6-Ditert.-butyl-p-kresol versetzt. Die Isolierung des Pfropfpolymeren erfolgt durch Vakuumeindampfung auf einer Ausdampfschnecke. Das erhaltene Produkt hat eine Grenzviskosität $[\eta]$ von 0,96

$$\left[ \frac{dl}{g} \right].$$

Die chemische Zusammensetzung ist:
12% Celluloseacetopropionat,

12% EVA,

76% polymerisierte Einheiten aus Vinylacetat.

Eine aus dem Pfropfpolymerisat bei 170° C und 200 bar Pressdruck hergestellte Pressplatte ist hochtransparent, weich, flexibel und zeigt keinerlei Weissbruch bei Dehnungsbeanspruchung.

Eine Glasübergangstemperatur wird bei +23° C gemessen und stellt den Hauptweichungsbereich der Probe dar, bei ca. −35° C zeigt sich ein weiterer Glasübergang, der der EVA-Komponente zuzuordnen ist.

Zur Untersuchung der Pfropfpolymerisatstruktur wurde eine Fraktionierung des erhaltenen Pfropfproduktes durchgeführt. Hierzu wurde das Produkt mit den entmischenden Flüssigkeiten Dimethylformamid/Methylcyclohexan[1] bei 25° C fraktioniert. In der folgenden Tabelle sind die Ergebnisse zusammengefasst.

---

[1] Vgl. R. Kuhn, „Makromol. Chem.", 177 (1976). 1525-1547.

| Gew.-% | | Sauerstoff (Gew.-%) | $[\eta]$ | $\dfrac{\varepsilon\ (2{,}85\ \mu m)^*}{\varepsilon\ (6{,}95\ \mu m)}$ | Aussehen | Gew.-% des mit EVA gekoppelten Celluloseesters |
|---|---|---|---|---|---|---|
| Obere Phase | 37,2 | 31,3 | 1,71 | 0,130 | trüb | 51 |
| Untere Phase | 62,8 | 37,0 | 0,88 | 0,075 | klar | —— |

\* $\varepsilon$: Fläche der Absorptionsbande bei der angegebenen Wellenlänge im IR-Spektrum.

Die untere Phase enthält nichtgepfropften Celluloseester und nicht gepfropftes Polyvinylacetat, während die obere Phase EVA und über Polymerisatbrücken mit EVA gekoppelte Celluloseester enthält. Aufgrund der Auswertung der erhaltenen analytischen Daten wurde sichergestellt, dass 51% des eingesetzten Celluloseesters über Vinylacetatbrücken mit dem eingesetzten EVA in querverbrückter (gekoppelter) Form vorliegt.

*Beispiel 2*

Unter Stickstoff werden 2000 g tert.-Butanol, 300 g Celluloseacetobutyrat, enthaltend 45% Buttersäure- und 19% Essigsäuregruppen, 300 g EVA mit 45% eingebautem Vinylacetat und 400 g Vinylacetat auf 70° C erwärmt. Wenn sich aus den Komponenten eine homogene Lösung gebildet hat, wird eine Lösung von 3 g tert.-Butylperpivalat in 1000 g tert.-Butanol in 2 h hinzugegeben. Anschliessend wird 2 h bei 70° C und 1 h bei 80° C nachgerührt. Auf einer Ausdampfschnecke werden die flüchtigen Anteile abgestrippt. Das Pfropfpolymerisat ist glasklar und lässt sich zu trockenen, elastischen Filmen verarbeiten. Die in Tetrahydrofuran gemessene Grenzviskosität beträgt

$$\eta = 0{,}82 \left[\frac{dl}{g}\right],$$

die Zusammensetzung ist 30,5% EVA, 30,5% Celluloseacetobutyrat und 39% polymerisierte Einheiten aus Vinylacetat. An dem Pfropfpolymerisat wird eine Schubmodulmessung (Messfrequenz ca. 1 Hz) durchgeführt. Man findet folgende Glasübergänge:

$Tg_1 = -32°$ C (reines EVA ca. −25° C),
$Tg_2 = +27°$ C (Polyvinylacetatphase), und
$Tg_3 = $ ca. 65° C.

*Beispiel 3*

In einem 6-l-Reaktor werden 2000 g tert.-Butanol, 500 g Wasser, 300 g Celluloseacetobutyrat, 300 g EVA mit 45% eingebautem Vinylacetat und 600 g Vinylacetat auf 80° C erwärmt. In die homogene Lösung werden 4,5 g tert.-Butylperivalat in 1000 g tert.-Butanol innerhalb von 3 h hinzugegeben. Anschliessend wird 1 h nachgerührt. Die flüchtigen Anteile werden in einer Ausdampfschnecke abgestrippt. Das Produkt hat eine Grenzviskosität von

$$\eta = 0{,}84 \left[\frac{dl}{g}\right]$$

und enthält 26% EVA, 26% Celluloseacetobutyrat und 48% polymerisierte Einheiten aus Vinylacetat. Eine aus dem Produkt hergestellte Pressplatte ist weich, flexibel und transparent.

*Beispiel 4*

In eine Lösung von 100 g Celluloseacetobutyrat, 100 g EVA mit 45% eingebautem Vinylacetat in 1500 g tert.-Butanol und 900 g Ethylacrylat werden bei 70° C innerhalb von 2 h 2,6 g tert.-Butylperpivalat in 200 g tert.-Butanol hinzugegeben. Anschliessend wird 3 h bei 70° C und 1 h bei 80° C nachgerührt. Das Pfropfpolymerisat wird durch Ausfällen in heissem Wasser isoliert. Nach dem Trocknen erhält man 1038 g eines Pfropfproduktes mit der Zusammensetzung 9,25% EVA, 9,25% Celluloseacetobutyrat und 81,5% polymerisierte Einheiten aus Ethylacrylat. Die Grenzviskosität in Tetrahydrofuran beträgt

$$\eta = 1{,}31 \left[\frac{dl}{g}\right].$$

*Beispiel 5*

In einer 2-Kessel-Anlage zur kontinuierlichen Polymerisation, die mit 2 je 5-l-Reaktoren versehen ist, wird bei 70° C Reaktionstemperatur nach folgender Vorschrift polymerisiert: Je Stunde werden folgende Lösungen in den Reaktor 1 eingetragen:

*Lösung 1:* 0,221 kg Celluloseacetobutyrat, 0,442 kg EVA mit 45% eingebautem Vinylacetat, 0,354 kg Vinylacetat und 2,482 kg tert.-Butanol.

Nach einer mittleren Verweilzeit von 40-45 min im 1. Reaktor und einem mittleren Monomerumsatz von etwa 85% wird der Polymerisatsirup in den 2. Reaktor eingetragen. Die mittlere Verweilzeit im 2. Reaktor beträgt etwa 40 min. Der Monomerumsatz nach Verlassen des 2. Reaktors liegt bei praktisch 100%. Der Polymerisatsirup wird über eine Ausdampfschnecke aufgearbeitet.

Das Pfropfprodukt weist eine Grenzviskosität von

$$\eta = 1{,}65 \left[ \frac{dl}{g} \right]$$

auf und besitzt folgende Zusammensetzung: 11,1% Celluloseester, 22,2% EVA und 66,7% polymerisierte Einheiten aus Vinylacetat. Das Produkt lässt sich zu hochtransparenten, zäh-elastischen Formkörpern verarbeiten.

### Beispiel 6

Eine Lösung von 150 g EVA mit 45% eingebautem Vinylacetat, 500 g Celluloseacetoptopionat, 150 g Vinylacetat und 2000 g tert.-Butanol wird bei 75° C innerhalb von 2 h mit 2,25 g tert.-Butylperivalat in 50 g Vinylacetat und 200 g tert.-Butanol versetzt. Anschliessend wird 2 h bei 75° C nachgerührt. Das Pfropfprodukt wird durch Fällung in Wasser isoliert, die flüchtigen Anteile werden abgestrippt und das Polymerisat getrocknet. Das Pfropfprodukt enthält 19% EVA, 63% Celluloseacetopropionat und 18% polymerisierte Einheiten aus Vinylacetat. Die Grenzviskosität [η] in Tetrahydrofuran beträgt

$$1{,}2 \left[ \frac{dl}{g} \right].$$

### Beispiel 7

In einem 40-l-Autoklaven wird eine Lösung von 14 200 g tert.-Butanol, 2130 g EVA mit 45% eingebautem Vinylacetat, 2130 g Celluloseacetopropionat und 800 g Vinylacetat auf 70° C erwärmt. Bei 70° C wird eine Lösung von 7100 g tert.-Butanol, 975 g Vinylacetat und 21,4 g tert.-Butylperpivalat innerhalb von 2 h bei 70° C zugegeben und 1 h bei 80° C gerührt. Der Ansatz wird mit 15 g 2,6-Ditert.-butyl-p-kresol versetzt und auf einer Ausdampfschnecke von flüchtigen Anteilen befreit. Das erhaltene Pfropfpolymerisat hat eine Grenzviskosität

$$\eta = 1{,}6 \left[ \frac{dl}{g} \right]$$

und enthält 35,25% EVA, 35,25% Celluloseacetopropionat und 29,5% polymerisierte Einheiten aus Vinylacetat.

### Beispiel 8

In eine Lösung aus 500 g Celluloseacetobutyrat, 150 g EVA mit 45% eingebautem Vinylacetat, 150 g Vinylacetat und 2000 g ert.-Butanol wird bei 70° C innerhalb von 2 h eine Lösung von 2,25 g tert.-Butylperivalat in 200 g tert.-Butanol eingetragen. Anschliessend wird 5 h bei 70° C nachgerührt. Das Pfropfprodukt wird durch Fällung der Lösung in Wasser isoliert, auf einer Walze mit Wasser gewaschen und im Vakuumschrank bei 70° C getrocknet. Das Produkt hat eine Grenzviskosität [η] in Tetrahydrofuran von

$$1{,}46 \left[ \frac{dl}{g} \right]$$

und enthält 18,5% EVA, 62,5% Celluloseacetobutyrat und 19% polymerisierte Einheiten aus Vinylacetat. Eine aus dem Pfropfprodukt hergestellte Pressplatte (170° C, 200 bar Pressdruck, 20 min Pressdauer) ist transparent und flexibel und weist beim Biegen und Dehnen keinen Weissbruch auf. Bei einer Schubmodulmessung an dieser Pressplatte (Messfrequenz ca. 1 Hz) werden folgende Glasübergänge gefunden:

$Tg_1 = -27°$ C (EVA),
$Tg_2 = +52°$ C (Mischphase aus vinylacetatgekoppeltem Celluloseester und EVA), und
$Tg_3 = +95°$ C (Celluloseacetobutyrat).

### Beispiel 9

In einem 6-l-Reaktor werden in 2000 g Dioxan 300 g EVA mit 45% eingebautem Vinylacetat, 300 g eines Celluloseacetats mit 54% Essigsäuregruppen und 800 g Methylacrylat auf 80° C erwärmt. Dann wird eine Lösung von 4,5 g tert.-Butylperivalat in 1000 g Dioxan innerhalb von 3 h hinzugegeben. Nach einer Nachrührzeit von 1 h wird der Ansatz mit 5 g 2,6-Ditert.-butyl-p-kresol versetzt und das Pfropfprodukt durch Ausfällen isoliert. Das Pfropfprodukt hat in THF eine Grenzviskosität

$$\eta = 0{,}58 \left[ \frac{dl}{g} \right]$$

und weist folgende Zusammensetzung auf: 27,6% Celluloseacetat, 27,6% EVA und 44,8% polymerisierte Einheiten aus Methylacrylat. Nach der in Beispiel 1 beschriebenen Verfahrensweise wird das Pfropfprodukt polymeranalytisch charakterisiert. Man findet, dass 44% des eingesetzten Celluloseacetats über Methacrylatbrücken mit EVA-Polymerisat gekoppelt vorliegt.

### Beispiel 10

In einem 40-l-Reaktor wird eine Lösung von 900 g Celluloseacetopropionat, 900 g EVA mit 45% eingebautem Vinylacetat, 2500 g Vinylacetat und 13 500 g tert.-Butanol mit 0,75 g tert.-Butylperivalat versetzt und auf 70° C erwärmt. Dann werden innerhalb von 4 h die folgenden Lösungen hinzugegeben:

*Lösung 1:* 5600 g Vinylacetat, 400 g Ethylen aus einer Druckvorlage,

*Lösung 2:* 24 g tert.-Butylperivalat in 4000 g tert.-Butanol.

Man rührt 3 h bei 70° C nach, versetzt den Ansatz mit 25 g 2,6-Ditert.-butyl-p-kresol und arbeitet den Ansatz über eine Ausdampfschnecke auf. Das Reaktionsprodukt hat eine Grenzviskosität

$$\eta = 1,02\left[\frac{dl}{g}\right]$$

und weist die folgende Zusammensetzung auf: 9,95% EVA, 9,95% Celluloseacetopropionat, 3,5% polymerisierte Einheiten aus Ethylen und 76,6% polymerisierte Einheiten aus Vinylacetat.

*Beispiel 11*

In einem 40-l-Reaktor wird eine Lösung von 1575 g Celluloseacetopropionat, 4680 g EVA mit 45% eingebautem Vinylacetat, 1000 g Vinylacetat und 13 500 g tert.-Butanol auf 110° C erwärmt. Dann wird eine Lösung aus 1700 g Vinylacetat, 15 g Benzoylperoxid und 4000 g tert.-Butanol innerhalb von 3 h hinzugegeben. Anschliessend rührt man 3 h bei 110° C nach, versetzt den Ansatz mit 18 g 2,6-Ditert.-butyl-p-kresol und arbeitet über eine Ausdampfschnecke auf. Der Vinylacetatumsatz beträgt 96%. Die Zusammensetzung des Pfropfpolymeren ist 52,9% EVA, 17,8% Celluloseacetopropionat und 29,3% polymerisierte Einheiten aus Vinylacetat. Die Grenzviskosität [η] beträgt

$$1,38\left[\frac{dl}{g}\right].$$

In Anlehnung an das in Beispiel 1 beschriebene Verfahren werden die in Tabelle 1 aufgeführten Copfropfpolymerisate der folgenden Zusammensetzung hergestellt:

*Tabelle 1*

| Copfropf-polymer | Gew.-% EVA | Cellulose-acetobutyrat | Cellulose-acetopropionat | Vinylacetat | Methyl-acrylat | n-Butyl-acrylat |
|---|---|---|---|---|---|---|
| 12 | 23,7 | — | 23,7 | 36,8 | — | 15,8 |
| 13 | 30 | 30 | — | 40 | — | — |
| 14 | 21,5 | 21,5 | — | 57 | — | — |
| 15 | 11 | 11 | — | — | 78 | — |
| 16 | 37,5 | 12,5 | — | 50 | — | — |
| 17 | 23 | 12 | — | 65 | — | — |
| 18 | 45 | — | 15 | 40 | — | — |
| 19 | 44,5 | — | 5,5 | 50 | — | — |
| 20 | 45 | — | 15 | 20 | — | 20 |
| 21 | 12,5 | 37,5 | — | 50 | — | — |

*Herstellung von Abmischungen*

*Beispiele 22 bis 32*

Celluloseacetobutyrat mit 45% Buttersäure- und 19% Essigsäuregruppen wird mit den in Tabelle 2 angegebenen Mengen der Copfropfpolymerisate auf einer Walze bei 170° C intensiv vermischt, wobei die Summe beider Komponenten 100% beträgt.

Die Walzfelle werden granuliert und anschliessend bei einer Massetemperatur von 230° C auf einer Spritzgussmaschine zu Prüfkörpern verspritzt.

In den Tabellen 2 und 3 bedeuten:

$a_n$ = Schlagzähigkeit nach DIN 53453 in kJ/m²

$a_k$ = Kerbschlagzähigkeit nach DIN 53453 in kJ/m²

Vicat = Erweichungstemperatur in °C nach DIN 53460, Verfahren B, Kraft 49,05 NJ

$H_k^{30}$ = Kugeldruckhärte nach 30 s nach DIN 53456 in N/mm²

*Tabelle 2*

| Beispiel | Copfropf-polymerisat aus Beispiel | %[a] | $a_n$ (kJ/m²) Raumtemp. | $a_n$ (kJ/m²) −40°C | $a_k$ (kJ/m²) | Vicat (°C) | $H_k^{30}$ (N/mm²) |
|---|---|---|---|---|---|---|---|
| 22 | 1 | 10 | Ung.[b] | 78,5 | 2,4 | 98 | 84 |
| 23 | 12 | 10 | Ung.[b] | Ung.[b] | 4,2 | 108 | 74 |
| 24 | 13 | 20 | 76 | 60 | 4,2 | 106 | 78 |
| 25 | 14 | 20 | 78 | 70 | 3,4 | 105 | 84 |
| 26 | 15 | 10 | 68 | 62 | 2,2 | 101 | 76 |
| 27 | 16 | 10 | Ung.[b] | Ung.[b] | 4,9 | 108 | 75 |
| 28 | 17 | 10 | 85 | 79 | 2,8 | 103 | 82 |
| 29 | 18 | 10 | Ung.[b] | 86 | 6,0 | 107 | 70 |
| 30 | 19 | 10 | Ung.[b] | Ung.[b] | 8,0 | 107 | 72 |
| 31 | 20 | 10 | Ung.[b] | 62-Ung.[b] | 6,4 | 102 | 62 |
| 32 | 21 | 10 | Ung.[b] | Ung.[b] | 3,3 | 111 | 78 |

[a] bezogen auf Polymermischung
[b] nicht gebrochen

*Beispiele 33 bis 40*

Celluloseacetopropionat enthaltend 57,5% Propionsäure- und 5,5% Essigsäuregruppen wird mit den in der Tabelle 3 angegebenen Mengen der Copfropfpolymerisate auf einer Walze bei 170° C intensiv vermischt, wobei die Summe der Komponenten 100% beträgt.

Die Walzfelle werden granuliert und anschliessend bei einer Massetemperatur von 230° C auf einer Spritzgussmaschine zu Prüfkörpern verspritzt.

*Tabelle 3*

| Beispiel | Copfropf-polymerisat aus Beispiel | $\%^{a)}$ | $a_n$ (kJ/m²) | | $a_k$ (kJ/m²) | Vicat (°C) | $H_k^{30}$ (N/mm²) |
|---|---|---|---|---|---|---|---|
| | | | Raumtemp. | −40° C | | | |
| 33 | 1 | 10 | 83 | 59 | 2,6 | 109 | 102 |
| 34 | 12 | 10 | 91 | 76 | 4,4 | 123 | 84 |
| 35 | 13 | 20 | 83 | 65 | 2,9 | 115 | 90 |
| 36 | 14 | 20 | 78 | 58 | 2,9 | 114 | 95 |
| 37 | 16 | 10 | 98 | 70 | 4,5 | 122 | 86 |
| 38 | 18 | 10 | $80\text{-Ung.}^{b)}$ | 78 | 5,3 | 122 | 82 |
| 39 | 19 | 10 | 90 | 71 | 5,5 | 127 | 84 |
| 40 | 21 | 10 | $\text{Ung.}^{b)}$ | $80\text{-Ung.}^{b)}$ | 3,3 | 128 | 92 |

a) bezogen auf Polymermischung
b) nicht gebrochen

**Patentansprüche** für die Vertragsstaaten BE, DE, FR, GB, IT, NL

1. Thermoplastische Formmassen bestehend aus
1) 1 bis 99 Gew.-% eines Pfropfsubstrates, das sich zusammensetzt aus
   a) 1 bis 99 Gew.-% eines Ethylen/Vinylester-Copolymerisats mit 5 bis 75 Gew.-% eingebautem Vinylester, und
   b) 99 bis 1 Gew.-% eines Celluloseesters einer oder mehrerer aliphatischer $C_1$ bis $C_5$-Carbonsäuren
und, als Pfropfmonomere, aus polymerisierten Einheiten von
2) 99 bis 1 Gew.-% Alkylestern der Acryl- und/oder Methacrylsäure und/oder Vinylestern und
3) 0 bis 20 Gew.-% $C_2$ bis $C_4$-α-Olefinen,
wobei mindestens ein Teil des Ethylen/Vinylester-Polymerisats und des Celluloseesters über polymerisierte Einheiten der Pfropfmonomeren miteinander verbrückt und die Summe der Komponenten (1 bis 3) und (a) und (b) jeweils 100 Gew.-% beträgt.

2. Thermoplastische Formmassen nach Anspruch 1 bestehend aus
1) 1 bis 99 Gew.-% eines Pfropfsubstrates, das sich zusammensetzt aus
   a) 1 bis 99 Gew.-% eines Ethylen/Vinylacetat-Copolymerisats mit 5 bis 75 Gew.-% eingebautem Vinylacetat, und
   b) 99 bis 1 Gew.-% eines Celluloseesters einer oder mehrerer aliphatischer $C_1$ bis $C_5$-Carbonsäuren
und, als Pfropfmonomere, aus polymerisierten Einheiten von
2) 99 bis 1 Gew.-% Vinylacetat und/oder $C_1$ bis $C_4$-Alkylestern der Acryl- und/oder Methacrylsäure, und
3) 0 bis 20 Gew.-% $C_2$ bis $C_4$-α-Olefinen,
wobei die Summe der Komponenten (1 bis 3) und (a) und (b) jeweils 100 Gew.-% beträgt.

3. Thermoplastische Formmassen nach den Ansprüchen 1 und 2, bestehend aus
1) 15 bis 85 Gew.-% eines Pfropfsubstrates, das sich zusammensetzt aus
   a) 20 bis 95 Gew.-% eines Ethylen/Vinylacetat-Copolymerisats mit 25 bis 55 Gew.-% eingebautem Vinylacetat, und
   b) 80 bis 5 Gew.-% eines Celluloseesters einer oder mehrerer aliphatischer $C_1$ bis $C_5$-Carbonsäuren
und, als Pfropfmonomere, aus polymerisierten Einheiten von
2) 85 bis 15 Gew.-% Vinylacetat und/oder $C_1$ bis $C_4$-Alkylestern der Acryl- und/oder Methacrylsäure, und
3) 0 bis 20 Gew.-% $C_2$ bis $C_4$-α-Olefinen,
wobei die Summe der Komponenten (1 bis 3) und (a) und (b) jeweils 100 Gew.-% beträgt.

4. Thermoplastische Formmassen bestehend aus
I 1 bis 99 Gew.-% eines Celluloseesters einer oder mehrerer aliphatischer $C_1$ bis $C_5$-Carbonsäuren, und
II 99 bis 1 Gew.-% eines Copfropfpolymerisates aus
1) 1 bis 99 Gew.-% eines Pfropfsubstrates, das sich zusammensetzt aus
   a) 1 bis 99 Gew.-% eines Ethylen/Vinylester-Polymerisats mit 5 bis 75 Gew.-% eingebautem Vinylester, und
   b) 99 bis 1 Gew.-% eines Celluloseesters einer oder mehrerer aliphatischer $C_1$ bis $C_5$-Carbonsäuren
und, als Pfropfmonomere, aus polymerisierten Einheiten von

2) 99 bis 1 Gew.-% Alkylestern der Acryl- und/oder Methacrylsäure und/oder Vinylestern, und

3) 0 bis 20 Gew.-% $C_2$ bis $C_4$-$\alpha$-Olefinen, wobei in der Komponente (II) mindestens ein Teil des Ethylen/Vinylester-Copolymerisats und ein Teil des Celluloseesters über polymerisierte Einheiten der Pfropfmonomeren miteinander verbrückt sind und die Summe der Komponenten (I) und (II) (1 bis 3) und (a) und (b) jeweils 100 Gew.-% beträgt.

5. Thermoplastische Formmassen nach Anspruch 4, enthaltend als Komponente (II) ein Copfropfpolymerisat aus

1) 1 bis 99 Gew.-% eines Pfropfsubstrates, das sich zusammensetzt aus

　　a) 1 bis 99 Gew.-% eines Ethylen/Vinylacetat-Copolymerisats mit 5 bis 75 Gew.-% eingebautem Vinylacetat, und

　　b) 99 bis 1 Gew.-% eines Celluloseesters einer oder mehrerer aliphatischer $C_1$ bis $C_5$-Carbonsäuren

und, als Pfropfmonomere, aus polymerisierten Einheiten von

2) 99 bis 1 Gew.-% Vinylacetat und/oder $C_1$ bis $C_4$-Alkylestern der Acryl- und/oder Methacrylsäure, und

3) 0 bis 20 Gew.-% $C_2$ bis $C_4$-$\alpha$-Olefinen, wobei die Summe der Komponenten (1 bis 3) und (a) und (b) jeweils 100 Gew.-% beträgt.

6. Thermoplastische Formmassen nach den Ansprüchen 4 und 5, enthaltend als Komponente (II) ein Copfropfpolymerisat aus

1) 15 bis 85 Gew.-% eines Pfropfsubstrates, das sich zusammensetzt aus

　　a) 20 bis 95 Gew.-% eines Ethylen/Vinylacetat-Copolymerisats mit 25 bis 55 Gew.-% eingebautem Vinylacetat, und

　　b) 80 bis 5 Gew.-% eines Celluloseesters einer oder mehrerer aliphatischer $C_1$ bis $C_5$-Carbonsäuren

und, als Pfropfmonomere, aus polymerisierten Einheiten von

2) 85 bis 15 Gew.-% Vinylacetat und/oder $C_1$ bis $C_4$-Alkylestern der Acryl- und/oder Methacrylsäure, und

3) 0 bis 20 Gew.-% $C_2$ bis $C_4$-$\alpha$-Olefinen, wobei die Summe der Komponenten (1 bis 3) und (a) und (b) jeweils 100 Gew.-% beträgt.

7. Thermoplastische Formmassen nach den Ansprüchen 1 bis 6, enthaltend als Celluloseester, Celluloseacetat, Celluloseacetobutyrat, Celluloseacetopropionat oder deren Mischungen.

**Patentansprüche** für den Vertragsstaat: AT

1. Verfahren zur Herstellung von thermoplastischen Formmassen aus

1) 1 bis 99 Gew.-% eines Pfropfsubstrates, das sich zusammensetzt aus

　　a) 1 bis 99 Gew.-% eines Ethylen/Vinylester-Copolymerisats mit 5 bis 75 Gew.-% eingebautem Vinylester, und

　　b) 99 bis 1 Gew.-% eines Celluloseesters einer oder mehrerer aliphatischer $C_1$ bis $C_5$-Carbonsäuren, und

polymerisierten Einheiten von

2) 99 bis 1 Gew.-% Alkylestern der Acryl- und/oder Methacrylsäure und/oder Vinylestern, und

3) 0 bis 20 Gew.-% $C_2$ bis $C_4$-$\alpha$-Olefinen, wobei mindestens ein Teil des Ethylen/Vinylester-Polymerisats und ein Teil des Celluloseesters über polymerisierte Einheiten der Pfropfmonomeren miteinander verbrückt sind und die Summe der Komponenten (1 bis 3) und (a) und (b) jeweils 100 Gew.-% beträgt, durch radikalische Polymerisation der Monomeren (2) und gegebenenfalls (3) in Gegenwart des Pfropfsubstratgemisches aus (1a) und (1b)

und gegebenenfalls Abmischung von

I　1 bis 99 Gew.-% des so erhaltenen Copfropfpolymerisats mit

II　99 bis 1 Gew.-% eines Celluloseesters einer oder mehrerer aliphatischer $C_1$ bis $C_5$-Carbonsäuren,

wobei die Summe der Komponenten (I) und (II) stets 100 Gew.-% beträgt.

2. Verfahren nach Anspruch 1, dadurch gekennzeichnet, dass

1) 1 bis 99 Gew.-% eines Pfropfsubstrates, das sich zusammensetzt aus

　　a) 1 bis 99 Gew.-% eines Ethylen/Vinylacetat-Copolymerisats mit 5 bis 75 Gew.-% eingebautem Vinylacetat, und

　　b) 99 bis 1 Gew.-% eines Celluloseesters einer oder mehrerer aliphatischer $C_1$ bis $C_5$-Carbonsäuren, und

als Pfropfmonomere

2) 99 bis 1 Gew.-% Vinylacetat und/oder $C_1$ bis $C_4$-Alkylestern der Acryl- und/oder Methacrylsäure, und

3) 0 bis 20 Gew.-% $C_2$ bis $C_4$-$\alpha$-Olefinen, wobei die Summe der Komponenten (1 bis 3) und (a) und (b) jeweils 100 Gew.-% beträgt, eingesetzt werden.

3. Verfahren nach den Ansprüchen 1 und 2, dadurch gekennzeichnet, dass

1) 15 bis 85 Gew.-% eines Pfropfsubstrates, das sich zusammensetzt aus

　　a) 20 bis 95 Gew.-% eines Ethylen/Vinylacetat-Copolymerisats mit 25 bis 55 Gew.-% eingebautem Vinylacetat, und

　　b) 80 bis 5 Gew.-% eines Celluloseesters einer oder mehrerer aliphatischer $C_1$ bis $C_5$-Carbonsäuren, und

als Pfropfmonomere

2) 85 bis 15 Gew.-% Vinylacetat und/oder $C_1$ bis $C_4$-Alkylestern der Acryl- und/oder Methacrylsäure, und

3) 0 bis 20 Gew.-% $C_2$ bis $C_4$-$\alpha$-Olefinen, wobei die Summe der Komponenten (1 bis 3) und (a) und (b) jeweils 100 Gew.-% beträgt, eingesetzt werden.

4. Verfahren nach den Ansprüchen 1 bis 3, dadurch gekennzeichnet, dass als Celluloseester, Celluloseacetat, Celluloseacetobutyrat, Celluloseacetopropionat oder deren Mischungen eingesetzt werden.

**Revendications** pour les Etats contractants BE, DE, FR, GB, IT, NL

1. Matières à mouler thermoplastiques constituées de
1) 1-99% en poids d'un substrat de greffage comprenant
   a) 1-99% en poids d'un copolymère d'éthylène/ester vinylique contenant 5-75% en poids d'un ester vinylique incorporé, et
   b) 99-1% en poids d'un ester de cellulose d'un ou de plusieurs acides carboxyliques aliphatiques en $C_1$-$C_5$,
et, comme monomères greffés, de motifs polymérisés de
2) 99-1% en poids d'esters alkyliques de l'acide acrylique et/ou de l'acide méthacrylique et/ou d'esters vinyliques, et
3) 0-20% en poids d'$\alpha$-oléfines en $C_2$-$C_4$,
au moins une partie du copolymère d'éthylène/ester vinylique et une partie de l'ester de cellulose étant pontées entre elles par des motifs polymérisés des monomères greffés, la somme des composants (1-3) et (a) et (b) étant chaque fois de 100% en poids.

2. Matières à mouler thermoplastiques suivant la revendication 1, constituées de
1) 1-99% en poids d'un substrat de greffage comprenant
   a) 1-99% en poids d'un copolymère d'éthylène/acétate de vinyle contenant 5-75% en poids d'acétate de vinyle incorporé, et
   b) 99-1% en poids d'un ester de cellulose d'un ou de plusieurs acides carboxyliques aliphatiques en $C_1$-$C_5$,
et, comme monomères greffés, de motifs polymérisés de
2) 99-1% en poids d'acétate de vinyle et/ou d'esters alkyliques en $C_1$-$C_4$ de l'acide acrylique et/ou de l'acide méthacrylique, et
3) 0-20% en poids d'$\alpha$-oléfines en $C_2$-$C_4$,
la somme des composants (1-3) et (a) et (b) étant chaque fois de 100% en poids.

3. Matières à mouler thermoplastiques suivant les revendications 1 et 2, constituées de
1) 15-85% en poids d'un substrat de greffage comprenant
   a) 20-95% en poids d'un copolymère d'éthylène/acétate de vinyle contenant 25-55% en poids d'acétate de vinyle incorporé, et
   b) 80-5% en poids d'un ester de cellulose d'un ou de plusieurs acides carboxyliques aliphatiques en $C_1$-$C_5$,
et, comme monomères greffés, de motifs polymérisés de
2) 85-15% en poids d'acétate de vinyle et/ou d'esters alkyliques en $C_1$-$C_4$ de l'acide acrylique et/ou de l'acide méthacrylique, et
3) 0-20% en poids d'$\alpha$-oléfines en $C_2$-$C_4$,
la somme des composants (1-3) et (a) et (b) étant chaque fois de 100% en poids.

4. Matières à mouler thermoplastiques constituées de
I 1-99% en poids d'un ester de cellulose d'un ou de plusieurs acides carboxyliques aliphatiques en $C_1$-$C_5$, et
II 99-1% en poids d'un copolymère greffé constitué de
1) 1-99% en poids d'un substrat de greffage comprenant
   a) 1-99% en poids d'un polymère d'éthylène/ester vinylique contenant 5-75% en poids d'ester vinylique incorporé, et
   b) 99-1% en poids d'un ester de cellulose d'un ou de plusieurs acides carboxyliques aliphatiques en $C_1$-$C_5$,
et, comme monomères greffés, de motifs polymérisés de
2) 99-1% en poids d'esters alkyliques de l'acide acrylique et/ou de l'acide méthacrylique et/ou d'esters vinyliques, et
3) 0-20% en poids d'$\alpha$-oléfines en $C_2$-$C_4$,
au moins une partie du copolymère d'éthylène/ester vinylique et une partie de l'ester de cellulose dans le composant (II) étant pontées l'une avec l'autre par des motifs polymérisés des monomères greffés, tandis que la somme des composants (I) et (II) (1-3) et (a) et (b) est chaque fois de 100% en poids.

5. Matières à mouler thermoplastiques suivant la revendication 4, contenant, comme composant (II), un copolymère greffé constitué de
1) 1-99% en poids d'un substrat de greffage comprenant
   a) 1-99% en poids d'un copolymère d'éthylène/acétate de vinyle contenant 5 à 75% en poids d'acétate de vinyle incorporé, et
   b) 99-1% en poids d'un ester de cellulose d'un ou de plusieurs acides carboxyliques aliphatiques en $C_1$-$C_5$,
et, comme monomères greffés, de motifs polymérisés de
2) 99-1% en poids d'acétate de vinyle et/ou d'esters alkyliques en $C_1$-$C_4$ de l'acide acrylique et/ou de l'acide méthacrylique, et
3) 0-20% en poids d'$\alpha$-oléfines en $C_2$-$C_4$,
la somme des composants (1-3) et (a) et (b) étant chaque fois de 100% en poids.

6. Matières à mouler thermoplastiques suivant les revendications 4 et 5, contenant, comme composant (II), un copolymère greffé constitué de
1) 15 à 85% en poids d'un substrat de greffage comprenant
   a) 20-95% en poids d'un copolymère d'éthylène/acétate de vinyle avec 25 à 55% en poids d'acétate de vinyle incorporé, et
   b) 80-5% en poids d'un ester de cellulose d'un ou de plusieurs acides carboxyliques aliphatiques en $C_1$-$C_5$,
et, comme monomères greffés, de motifs polymérisés de
2) 85-15% en poids d'acétate de vinyle et/ou d'esters alkyliques en $C_1$-$C_4$ de l'acide acrylique et/ou de l'acide méthacrylique, et
3) 0-20% en poids d'$\alpha$-oléfines en $C_2$-$C_4$,
la somme des composants (1-3) et (a) et (b) étant chaque fois de 100% en poids.

7. Matières à mouler thermoplastiques suivant les revendications 1 à 6, contenant, comme esters de cellulose, de l'acétate de cellulose, de l'acéto- butyrate de cellulose, de l'acétopropionate de cellulose ou leurs mélanges.

**Revendications** pour l'Etat contractant: AT

1. Procédé de préparation de matières à mouler thermoplastiques à partir de:
1) 1-99% en poids d'un substrat de greffage comprenant:
   a) 1-99% en poids d'un copolymère d'éthylène/ester vinylique contenant 5 à 75% en poids d'ester vinylique incorporé, et
   b) 99-1% en poids d'un ester de cellulose d'un ou de plusieurs acides carboxyliques aliphatiques en C₁-C₅,
ainsi que de motifs polymérisés de
2) 99-1% en poids d'esters alkyliques de l'acide acrylique et/ou de l'acide méthacrylique et/ou d'esters vinyliques, et
3) 0-20% en poids d'α-oléfines en C₂-C₄,
au moins une partie du polymère d'éthylène/ester vinylique et une partie de l'ester de cellulose étant pontées l'une avec l'autre par des motifs polymérisés des monomères greffés, tandis que la somme des composants (1-3) et a) et b) est chaque fois de 100% en poids, par polymérisation radicalaire des monomères 2) et éventuellement 3) en présence du mélange du substrat de greffage de 1a) et 1b), et éventuellement par mélange de
I 1-99% en poids du copolymère greffé ainsi obtenu avec
II 99-1% en poids d'un ester de cellulose d'un ou de plusieurs acides carboxyliques aliphatiques en C₁-C₅,
la somme des composants I) et II) étant constamment de 100% en poids.

2. Procédé suivant la revendication 1, caractérisé en ce qu'on utilise:
1) 1-99% en poids d'un substrat de greffage comprenant:
   a) 1-99% en poids d'un copolymère d'éthylène/acétate de vinyle contenant 5 à 75% en poids d'acétate de vinyle incorporé, et
   b) 99-1% en poids d'un ester de cellulose d'un ou de plusieurs acides carboxyliques aliphatiques en C₁-C₅,
et, comme monomères greffés:
2) 99-1% en poids d'acétate de vinyle et/ou d'esters alkyliques en C₁-C₄ de l'acide acrylique et/ou de l'acide méthacrylique, et
3) 0-20% en poids d'α-oléfines en C₂-C₄,
la somme des composants 1-3) et a) et b) étant chaque fois de 100% en poids.

3. Procédé suivant les revendications 1 et 2, caractérisé en ce qu'on utilise:
1) 15-85% en poids d'un substrat de greffage comprenant:
   a) 20-95% en poids d'un copolymère d'éthylène/acétate de vinyle contenant 25 à 55% en poids d'acétate de vinyle incorporé, et
   b) 80-5% en poids d'un ester de cellulose d'un ou de plusieurs acides carboxyliques aliphatiques en C₁-C₅,
et, comme monomères greffés
2) 85-15% en poids d'acétate de vinyle et/ou d'esters alkyliques en C₁-C₄ de l'acide acrylique et/ou de l'acide méthacrylique, et
3) 0-20% en poids d'α-oléfines en C₂-C₄,
la somme des composants 1-3) et a) et b) étant chaque fois de 100% en poids.

4. Procédé suivant les revendications 1 à 3, caractérisé en ce que, comme esters de cellulose, on utilise l'acétate de cellulose, l'acétobutyrate de cellulose, l'acétopropionate de cellulose ou leurs mélanges.

**Claims** for the contracting States BE, DE, FR, GB, IT, NL

1. Thermoplastic moulding compositions consisting of
(1) 1-99% by weight of a graft base which is composed of
   (a) 1-99% by weight of an ethylene/vinyl ester copolymer containing 5-75% by weight of incorporated vinyl ester, and
   (b) 99-1% by weight of a cellulose ester of one or more aliphatic C₁ to C₅-carboxylic acids,
and of, as graft monomers, polymerised units of
(2) 99-1% by weight of alkyl esters of acrylic and/or methacrylic acid and/or vinyl esters, and
(3) 0-20% by weight of C₂ to C₄-α-olefins,
at least a part of the ethylene/vinyl ester polymer and a part of the cellulose ester being bridged with one another through polymerised units of the graft monomers and the sum of components (1-3) and (a) and (b) in each case amounting to 100% by weight.

2. Thermoplastic moulding compositions according to claim 1, consisting of
(1) 1-99% by weight of a graft base, which is composed of
   (a) 1-99% by weight of an ethylene/vinyl acetate copolymer containing 5-75% by weight of incorporated vinyl acetate, and
   (b) 99-1% by weight of a cellulose ester of one or more aliphatic C₁ to C₅-carboxylic acids,
and of, as graft monomers, polymerised units of
(2) 99-1% by weight of vinyl acetate and/or C₁ to C₄-alkyl esters of acrylic and/or methacrylic acid, and
(3) 0-20% by weight of C₂ to C₄-α-olefins,
the sum of components (1-3) and (a) and (b) amounting in each case to 100% by weight.

3. Thermoplastic moulding compositions according to claims 1 and 2, consisting of
(1) 15-85% by weight of a graft base which is composed of
   (a) 20-95% by weight of an ethylene/vinyl acetate copolymer containing 25-55% by weight of incorporated vinyl acetate, and
   (b) 80-5% by weight of a cellulose ester of one or more aliphatic C₁ to C₅-carboxylic acids,
and of, as graft monomers, polymerised units of
(2) 85-15% by weight of vinyl acetate and/or C₁ to C₄-alkyl esters of acrylic and/or methacrylic acid, and
(3) 0-20% by weight of C₂ to C₄-α-olefins,
the sum of components (1-3) and (a) and (b) amounting in each case to 100% by weight.

4. Thermoplastic moulding compositions consisting of
(I) 1-99% by weight of a cellulose ester of one or more aliphatic $C_1$ to $C_5$-carboxylic acids, and
(II) 99-1% by weight of a graft copolymer of
(1) 1-99% by weight of a graft base, which is composed of
(a) 1-99% by weight of an ethylene/vinyl ester polymer containing 5-75% by weight of incorporated vinyl ester, and
(b) 99-1% by weight of a cellulose ester of one or more aliphatic $C_1$ to $C_5$-carboxylic acids,
and of, as graft monomers, polymerised units of
(2) 99-1% by weight of alkyl esters of acrylic and/or methacrylic acid and/or vinyl esters, and
(3) 0-20% by weight of $C_2$ to $C_4$-α-olefins,
at least a part of the ethylene/vinyl ester copolymer and a part of the cellulose ester in component (II) being bridged with one another through polymerised units of the graft monomers and the sum of components (I) and (II) (1-3) and (a) and (b) amounting in each case to 100% by weight.

5. Thermoplastic moulding compositions according to claim 4, containing as component (II) a graft copolymer of
(1) 1-99% by weight of a graft base, which is composed of
(a) 1-99% by weight of an ethylene/vinyl acetate copolymer containing 5-75% by weight of incorporated vinyl acetate, and
(b) 99-1% by weight of a cellulose ester of one or more aliphatic $C_1$ to $C_5$-carboxylic acids,
and of, as graft monomers, polymerised units of
(2) 99-1% by weight of vinyl acetate and/or $C_1$ to $C_4$-alkyl esters of acrylic and/or methacrylic acid, and
(3) 0-20% by weight of $C_2$ to $C_4$-α-olefins,
the sum of components (1-3) and (a) and (b) amounting in each case to 100% by weight.

6. Thermoplastic moulding compositions according to claims 4 and 5, containing as component (II) a graft copolymer of
(1) 15-85% by weight of a graft base, which is composed of
(a) 20-95% by weight of an ethylene/vinyl acetate copolymer containing 25-55% by weight of incorporated vinyl acetate, and
(b) 80-5% by weight of a cellulose ester of one or more aliphatic $C_1$ to $C_5$-carboxylic acids,
and of, as graft monomers, polymerised units of
(2) 85-15% by weight of vinyl acetate and/or $C_1$ to $C_4$-alkyl esters of acrylic and/or methacrylic acid, and
(3) 0-20% by weight of $C_2$ to $C_4$-α-olefins,
the sum of components (1-3) and (a) and (b) amounting in each case to 100% by weight.

7. Thermoplastic moulding compositions according to claims 1 to 6, containing cellulose acetate, cellulose acetobutyrate, cellulose acetopropionate or mixtures thereof as the cellulose ester.

**Claims** for the contracting State: AT

1. Process for the production of thermoplastic moulding compositions of
(1) 1-99% by weight of a graft base, which is composed of
(a) 1-99% by weight of an ethylene/vinyl ester copolymer containing 5-75% by weight of incorporated vinyl ester, and
(b) 99-1% by weight of a cellulose ester of one or more aliphatic $C_1$ to $C_5$-carboxylic acids,
and polymerised units of
(2) 99-1% by weight of alkyl esters of acrylic and/or methacrylic acid and/or vinyl esters, and
(3) 0-20% by weight of $C_2$ to $C_4$-α-olefins,
at least a part of the ethylene/vinyl ester polymer and a part of the cellulose ester being bridged with one another through polymerised units of the graft monomers and the sum of components (1-3) and (a) and (b) amounting in each case to 100% by weight, by free radical polymerisation of the monomers (2) and optionally (3) in the presence of the graft base mixture of (1a) and (1b) and optionally mixing
(I) 1-99% by weight of the resulting graft copolymer with
(II) 99-1% by weight of a cellulose ester of one or more aliphatic $C_1$ to $C_5$-carboxylic acids,
the sum of components (I) and (II) always amounting to 100% by weight.

2. Process according to claim 1, characterised in that
(1) 1-99% by weight of a graft base, which is composed of
(a) 1-99% by weight of an ethylene/vinyl acetate copolymer containing 5-75% by weight of incorporated vinyl acetate, and
(b) 99-1% by weight of a cellulose ester of one or more aliphatic $C_1$ to $C_5$-carboxylic acids,
and as graft monomers
(2) 99-1% by weight of vinyl acetate and/or $C_1$ to $C_4$-alkyl esters of acrylic and/or methacrylic acid, and
(3) 0-20% by weight of $C_2$ to $C_4$-α-olefins,
the sum of components (1-3) and (a) and (b) amounting in each case to 100% by weight, are used.

3. Process according to claims 1 and 2, characterised in that
(1) 15-85% by weight of a graft base, which is composed of
(a) 20-95% by weight of an ethylene/vinyl acetate copolymer containing 25-55% by weight of incorporated vinyl acetate, and
(b) 80-5% by weight of a cellulose ester of one or more aliphatic $C_1$ to $C_5$-carboxylic acids,
and as graft monomers
(2) 85-15% by weight of vinyl acetate and/or $C_1$ to $C_4$-alkyl esters of acrylic and/or methacrylic acid, and
(3) 0-20% by weight of $C_2$ to $C_4$-α-olefins,
the sum of components (1-3) and (a) and (b) amounting in each case to 100% by weight, are used.

4. Process according to claims 1 to 3, characterised in that cellulose acetate, cellulose acetobutyrate, cellulose acetopropionate or mixtures thereof are used as the cellulose ester.